Europäisches Patentamt

European Patent Office

Office européen des brevets

(11) Publication number: **0 493 637 A1**

# EUROPEAN PATENT APPLICATION

(21) Application number: **90430028.2**

(22) Date of filing: **31.12.90**

(51) Int. Cl.⁵: **C08F 210/16**, C08F 2/34, C08F 4/685

(43) Date of publication of application:
**08.07.92 Bulletin 92/28**

(84) Designated Contracting States:
**AT BE CH DE DK ES FR GB GR IT LI LU NL SE**

(71) Applicant: **BP CHEMICALS SNC**
**Tour Neptune Cédex 20**
**F-92086 Paris La Défense 1(FR)**
(84) **FR**

(71) Applicant: **BP Chemicals Limited**
**Chertsey Road**
**Sunbury-on-Thames, Middlesex TW16 7LN(GB)**
(84) **BE CH DE DK ES GB GR IT LI LU NL SE AT**

(72) Inventor: **Bailly, Jean-Claude André BP**
**Chemicals SNC**
**Centre de Recherches Serv. Prop. BP No. 6**
**F-13117 Lavera(FR)**
Inventor: **Behue, Patrick BP Chemicals SNC**
**Centre de Recherches Serv. Prop. Ind. BP No. 6**
**F-13117 Lavera(FR)**
Inventor: **Bres, Philippe BP Chemicals SNC**
**Centre de Recherches Serv. Prop. Ind. BP No. 6**
**F-13117 Lavera(FR)**

(74) Representative: **Hymers, Ronald Robson**
**c/o BP Chemicals S.N.C. Centre de Recherche, Service Propriété Industrielle BP No. 6**
**F-13117 Lavera(FR)**

(54) **Process for (co-)polymerizing ethylene.**

(57) The present invention relates to a process for manufacturing in a gaseous phase a polyolefin, preferably a copolymer of ethylene containing from about 1% to less than 30% by weight of at least one alpha-olefin comprising 3 to 8 carbon atoms, in the presence of a Ziegler-Natta catalyst system comprising (1) a solid catalyst and (2) a cocatalyst based on at least one organometallic compound. The solid catalyst is obtained by contacting (a) a vanadium compound and a titanium compound with (b) at least one organometallic compound capable of reducing the said vanadium and titanium compounds and with (c) a support containing magnesium dichloride free from any Mg-C bond and an electron-donor compound, D1, free from labile hydrogen, the said support consisting of spheroidal particles having given sizes and a narrow particle size distribution. Prior to its contact with (a) and (b), the support is preferably contacted with at least one electron donor compound, D2, containing labile hydrogen. The ethylene (co)polymer is directly obtained in the form of a dry powder consisting of spheroidal non-adhesive particles.

EP 0 493 637 A1

The present invention relates to a polymerization of olefins, such as ethylene, and particularly to a gas phase copolymerization of ethylene with one or more alpha-olefins containing 3 to 8 carbon atoms with the help of a vanadium-and titanium-based catalyst of the Ziegler-Natta type, supported on magnesium chloride.

It is known that catalyst systems of the Ziegler-Natta type consist of a catalyst comprising at least one compound of a transition metal, such as titanium, and of a cocatalyst comprising at least one organometallic compound of a metal such as aluminium. It is known, furthermore, that the properties of these catalysts can be greatly affected when the transition metal compound is employed with a support consisting of a solid inorganic compound, such as magnesium chloride. In the technique of preparation of a supported catalyst the properties of the support and the process for preparing the catalyst, which generally consists in fixing the transition metal compound on the said support, are of very great importance for the catalyst's characteristics and behaviour in a reaction of polymerization or copolymerization of olefins.

According to European Patent Application EP-A-0,099,772, it is known to (co-)polymerize ethylene optionally with alpha-olefins in a gas phase process with the help of a Ziegler-Natta type catalyst prepared by precipitating a transition metal compound on a spheroidal support of magnesium chloride which includes products containing a Mg-C bond and a low proportion of an electron-donor compound. The transition metal compound is a halogenated titanium compound and the precipitation of the latter on the support is performed by a reaction of reduction of the titanium compound with a reducing agent such as an organometallic compound. This catalyst is employed for the manufacture of ethylene (co)polymers. It has now been observed, however, that the process is not ideal for producing ethylene copolymers having for instance a relatively high melt index and/or a relatively high comonomer content. In particular, when the copolymers of ethylene with alpha-olefins containing 5 to 8 carbons atoms have a relatively low weight-average molecular weight and/or a relatively low density, the copolymer powder prepared in a gas phase process generally tends to become more sticky, which maybe leads to difficulties for controlling the copolymerization reaction.

A process for the manufacture of polyolefins, in particular a copolymer of ethylene with one or more alpha-olefins containing 3 to 8 preferably 5 to 8 carbon atoms in a gas phase process has now been found, a process which enables the disadvantages mentioned above to be avoided. In particular, a vanadium-and titanium-based catalyst supported on spheroidal particles of magnesium dichloride has been found to be suitable to the manufacture of polyolefins, in particular ethylene copolymers. In this case, the catalyst enables an ethylene copolymer having a relatively high melt index and/or a relatively high comonomer content to be manufactured in a gas phase process directly in the form of a powder consisting of spheroidal non-adhesive particles, this powder having good flow properties and being easy to handle.

The subject matter of the present invention is a process for preparing in a gaseous phase a copolymer of ethylene with at least one alpha-olefin containing 3 to 8 carbon atoms in the presence of a Ziegler-Natta catalyst system comprising (1) a solid catalyst comprising a transition metal and a spheroidal magnesium chloride support and (2) a cocatalyst based on at least one organometallic compound of a metal belonging to groups I to III of the Periodic Classification of the elements, a process characterised in that a mixture of ethylene with the said alpha-olefin(s) is contacted with the cocatalyst and a solid catalyst to produce directly in the form of a dry powder a copolymer of ethylene containing from about 1% to less than 30% by weight of the said alpha-olefin(s), the solid catalyst having been obtained by contacting within a liquid hydrocarbon:

(a) a vanadium compound and a titanium compound, both soluble in said liquid hydrocarbon with V/Ti atomic ratio from 50/50 to 99.5/0.5, with

(b) at least one organometallic compound capable of reducing the said vanadium and titanium compounds, and with

(c) a solid support containing (i) from 80 to 99.5 mol% of magnesium dichloride which is substantially free from any product containing an Mg-C bond, and (ii) from 0.5 to 20 mol% of at least one organic electron-donor compound, D1, free from labile hydrogen, the said solid support consisting of spheroidal particles which have a mass-average diameter, Dm, of 10 to 100 microns and a narrow particle size distribution such that the ratio of Dm to the number-average diameter, Dn, of the particles is less than 2.5.

According to the present invention, the copolymerization of ethylene is carried out in the presence of a specific catalyst employing a particular magnesium chloride support, on which a vanadium compound and a titanium compound are precipitated by reduction thereof. The particular magnesium chloride support before contact with (a) and (b) is substantially free from products containing an Mg-C bond, e.g. with a ratio of the number of Mg-C bonds to the number of magnesium atoms in the support less than 0.001. The atomic ratio Cl/Mg of the support is substantially equal to 2. The reduction of the vanadium and of the titanium is performed by means of at least one organometallic compound reducing agent, which is brought into contact with the particular magnesium chloride support and the vanadium and titanium compounds. One of the surprising aspects of the catalyst used in the present invention is linked with the fact that the vanadium and titanium compounds are precipitated on the solid support without being substantially precipitated separately from it and without substantially producing fine or microfine particles, which are undesirable in a gas phase process for (co-)polymerizing olefins.

The preparation of a specific catalyst particularly suitable for the (co-)polymerization of olefins constitutes a further aspect of the invention and preferably consists of a process characterized in that a vanadium compound and a titanium compound are precipitated on a support by means of a reaction of reduction of vanadium and of titanium, which is carried out by contacting within a liquid hydrocarbon:

(a) a vanadium compound and a titanium compound, both soluble in said liquid hydrocarbon with V/Ti atomic ratio from 50/50 to less than 70/30 e.g. 55/45 to 65/35, with

(b) at least one organometallic compound capable of reducing the said vanadium and titanium compounds, and with

(c) a support containing (i) from 80 to 99.5 mol% of magnesium dichloride which is substantially free from any product containing an Mg-C bond, and (ii) from 0.5 to 20 mol% of at least one organic electron-donor compound D1 free from labile hydrogen, the said support consisting of spheroidal particles having a mass-average diameter Dm of 10 to 100 microns and a particle size distribution such that the ratio of Dm to the number-average diameter Dn of the particles is less than 2.5, preferably less than 2.

The specific catalyst thus prepared consists of spheroidal particles having a very narrow particle size distribution, and substantially does not comprise fine or microfine particles, which are undesirable for (co-)polymerizing alpha-olefins, particularly in a gas phase process with the help of a fluid bed reactor. This specific catalyst can be employed for polymerizing or copolymerizing under satisfactory industrial conditions a large number of alpha-olefins having from 2 to 12, preferably from 2 to 8 carbon atoms, such as ethylene, propylene, 1-butene, 1-hexene, 4-methyl-1-pentene or 1-octene. It is particularly suitable for manufacturing homopolyethylene, ethylene copolymer containing from about 1% to less than 30%, especially from about 1 to 25% by weight of the alpha-olefin(s). The ethylene copolymer may be a high density ethylene copolymer with an alpha-olefin content by weight from about 1% to less than 5%, or a linear low density polyethylene (LLDPE) with an alpha-olefin content by weight from 5 to 10%, or a very low density polyethylene (VLDPE) with an alpha-olefin content by weight higher than 10% and lower than 30%, especially equal to or lower than 25% by weight. The density of the homopolyethylene may be from 0.96 to 0.97 $g/cm^3$. The density of the ethylene copolymer may be from 0.88 $g/cm^3$ to a value lower than 0.96 $g/cm^3$, preferably from 0.915 to 0.935 $g/cm^3$ when the ethylene copolymer is a LLDPE, and preferably from 0.88 $g/cm^3$ to a value lower than 0.915 $g/cm^3$, when the ethylene copolymer is a VLDPE.

The particular magnesium chloride support used for preparing the catalysts includes a relatively large quantity of an organic electron-donor compound D1. This characteristic contributes to promoting the fixing of a large quantity of the vanadium and titanium compounds on the support and to endowing the catalyst with a remarkable activity in the copolymerization of olefins. The support contains from 80 to 99.5 preferably from 80 to 95 mol% of magnesium dichloride and from 0.5 to 20 preferably from 5 to 20 mol% of compound D1, especially from 80 to 90 mol% of magnesium dichloride and from 10 to 20 mol% of compound D1 and yields excellent vanadium- and titanium-based catalysts for the copolymerization of olefins.

The organic electron-donor compound, D1, is known as such, or as a Lewis base. It is free from labile hydrogen and, consequently, cannot be chosen from water, alcohols or phenols, for example. It may have a relatively low complexing power in relation to magnesium dichloride. It is advantageously chosen from ethers, thioethers, carboxylic acid esters, sulphones, sulphoxides, tertiary phosphines, tertiary amines and secondary amides. Ethers are preferably employed.

Preferably, the support is in the form of a homogeneous composition, therein the compound D1 is distributed homogeneously throughout the magnesium chloride particle, from the core to the periphery of the latter, and not only at its periphery. As a result, in order to obtain a support of this kind, it is recommended to prepare it by a method using precipitation. In this case, the compound D1 is chosen from products likely not to react with the reactants employed by the precipitation of the support. For instance, in this case the compound D1 cannot be a carboxylic acid ester which reacts with Grignard or organomagnesium compounds.

The support yields high-performance catalysts capable of withstanding the enormous growth stresses during copolymerization when it has an essentially amorphous structure, substantially or completely free from crystallinity. This particular form of the support can be obtained by a precipitation carried out as described below.

The support consists of spheroidal particles which have a mass-average diameter of 10 to 100 microns,

EP 0 493 637 A1

preferably of 20 to 50 microns. The particles of the support have a very narrow particle size distribution such that the ratio Dm/Dn of the mass-average diameter Dm to the number-average diameter Dn is less than 2.5, preferably from 1.1 to 2.0. Advantageously the support has virtually no particle of a diameter greater than 1.5 x Dm or smaller than 0.6 x Dm. The particle size distribution is also preferably such that more than 90% by weight of the particles of the same single batch lie within the range Dm ± 10%.

Spheroidal particles are substantially spherical, e.g. ones whose ratio of the long axis to the short axis is equal to or less than about 1.5, preferably equal to or less than 1.3.

The specific surface area of the support particles may be from 20 to 100 $m^2/g$ (BET), preferably from 30 to 60 $m^2/g$ (BET) and the relative density of these particles may be approximately 1.2 to 2.1.

The support may especially be prepared according to the process described in EP.A.336545. In particular, it is prepared by reacting preferably in hydrocarbon solution, a dialkylmagnesium compound with an organic chlorine compound in the presence of the electron-donor compound D1. The dialkylmagnesium compound chosen may be a product of formula $R_1MgR_2$, in which $R_1$ and $R_2$ are identical or different alkyl radicals containing from 2 to 12 carbon atoms. This dialkylmagnesium compound is soluble in the hydrocarbon medium where the preparation of the support will be carried out. The organic chlorine compound is preferably an alkyl chloride of formula $R_3Cl$ in which $R_3$ is a secondary or, preferably, tertiary alkyl radical containing from 3 to 12 especially from 4 to 6 carbon atoms. The electron-donor compound D1 employed is preferably an ether of formula $R_4OR_5$ in which $R_4$ and $R_5$ are identical or different alkyl radicals containing from 1 to 12 especially from 3 to 7 carbon atoms.

In addition, the various reactants used for the preparation of the support may be employed in the following proportions:
- the molar ratio $R_3Cl/R_1MgR_2$ is from 1.9 to 2.5, preferably from 2 to 2.3,
- the molar ratio $D1/R_1MgR_2$ is from 0.1 to 1.2, preferably from 0.3 to 0.8.

The reaction between $R_1MgR_2$ and $R_3Cl$ in the presence of the electron-donor compound D1 is a precipitation which takes place with agitation e.g. stirring within a liquid hydrocarbon. While the reaction may be performed over a wide range of temperatures, e.g. from 0 to 100°C, to obtain an excellent support containing a large quantity of the electron-donor compound D1, it is recommended to perform the precipitation reaction at a relatively low temperature, ranging from 10 to 50°C, preferably from 15 to 35°C. Also while reaction times of 1 to 50 hours may be used, it is recommended, furthermore, that the precipitation reaction should take place extremely slowly, over a period of at least 10 hours, preferably from 10 to 24 hours by appropriate speed of introduction of the reactants, so as to permit an appropriate amorphous solid product to be formed, in particular one with a large quantity of the compound D1 uniformly dispersed in the support.

The catalyst preparation process consists in precipitating a vanadium compound and a titanium compound on the magnesium chloride support within a liquid hydrocarbon. The liquid hydrocarbon used in the catalyst preparation process may be aliphatic or aromatic, and especially one or more alkanes of boiling point from 50 to 150°C, such as n-hexane or n-heptane.

The vanadium compound and the titanium compound employed for the preparation of this catalyst may have halogen atoms, such as chlorine or bromine atoms, and alkoxy groups so that the overall molar ratio of the alkoxy groups to the halogen atoms of these compounds is from 0 to 4, preferably from 0 to 2. As this molar ratio rises, the activity of the catalysts in the copolymerization of ethylene with the alpha-olefin(s) tends to fall.

The vanadium compound is soluble in the liquid hydrocarbon and is, in general, a compound in which the vanadium has its maximum valency 4, or the vanadyl group VO has its maximum valency, i.e. 3. The vanadium compound employed may be of the general formula $V(OR)_{4-m}X_m$ or $VO(OR)_{3-n}X_n$ in which R denotes an alkyl group containing from 1 to 12 preferably from 2 to 6 carbon atoms, X a halogen atom, such as bromine or chlorine, m an integral or fractional number ranging from 0 to 4 especially 0 or 4 and n an integral or fractional number ranging from 0 to 3 especially 0 or 3. Advantageously, one or more compounds can be employed, chosen from vanadium tetrachloride, vanadyl trichloride, vanadyl tri-n-propoxide, vanadyl triisopropoxide and vanadium tetra-n-propoxide.

The titanium compound is also soluble in liquid hydrocarbon and is generally a compound in which the titanium has its maximum valency, i.e. 4. The titanium compound employed may be a compound which has the general formula $Ti(OR_6)_{4-p}X_p$ in which $R_6$ is an alkyl group containing from 1 to 12 preferably from 2 to 6 carbon atoms, X a halogen atom, such as bromine or chlorine, and p an integral or fractional number ranging from 0 to 4, especially 0 or 4. Among these compounds, titanium tetrachloride or titanium tetraisopropoxide are preferred.

The quantities of vanadium and titanium compounds which are employed to prepare the catalyst depend on the desired quantity of vanadium and titanium to be fixed in the support and on the quantity of

4

organic electron-donor compound D1 present in the support. The quantity of vanadium compound to be employed during the catalyst preparation is generally from 0.05 to 2, preferably from 0.1 to 1 mole per mole of magnesium dichloride of the support.

The quantity of the titanium compound used is in particular such that the atomic ratio of vanadium to titanium is from 50/50 to 99.5/0.5, preferably from 70/30 to 99/1, and more specifically from 80/20 to 98/2. Catalysts prepared with such ratios are particularly suitable for manufacturing in gaseous phase a nonadhesive ethylene copolymer powder with good flow properties, and a relatively narrow molecular weight distribution. As the atomic ratio of the vanadium to titanium decreases, the catalyst obtained tends to produce more crystalline copolymers. On the other hand, as this ratio increases broader molecular weight distribution.

The organometallic compounds used for reduction to precipitate the vanadium and titanium compounds on the support are preferably organometallic compounds of metals belonging to groups I to III of the Periodic Classification of the elements and are soluble in the liquid hydrocarbon used in the catalyst preparation. Organoaluminium, organomagnesium or organozinc compounds are preferably employed, especially ones in which the organic group is alkyl, e.g. from 1 to 8 carbon atoms, in particular a trialkylaluminium, such as triethylaluminium or triisobutylaluminium, or an alkylaluminium halide, such as diethylaluminium chloride. The reducing agent may be employed in a relatively small quantity if bursting of the catalyst into fine particles during the co-polymerization is to be avoided. The quantity of the reducing agent employed during the catalyst preparation is generally from 0.05 to 2 moles, preferably from 0.1 to 1 mole per mole of magnesium dichloride of the support. Furthermore, the catalyst may be prepared in the presence of an additional quantity of an electron-donor compound, within the same broad definition of D1 and identical with or different from that present in the support.

The preparation of the catalyst within the liquid hydrocarbon is performed by bringing the support into contact with the vanadium and titanium compounds and the reducing agent at a temperature which may be from 0 to 120°C, preferably from 50 to 90°C. The period of contact may be approximately from 0.5 to 15 hours.

In practice, the preparation of the catalyst may be performed in various ways. For example, the reducing agent, the vanadium compound and the titanium compound may be added simultaneously or successively in any order to a suspension of the magnesium chloride support in the liquid hydrocarbon. The mixture thus prepared may be agitated for a period of 0.5 to 15 hours. In particular, in order to increase the quantities of vanadium and of titanium fixed in the support, it may be preferable first to add the reducing agent to the suspension of magnesium chloride support and then to add the vanadium compound and the titanium compound to this suspension. In this latter case, after the reducing agent has been brought into contact with the support, the latter may be washed using a liquid hydrocarbon, before vanadium and titanium compounds are added. The vanadium and titanium compounds may be advantageously mixed before they are brought into contact with the support. Although the major part of the quantity of the vanadium compound and of that of the titanium compound employed is fixed on the support, the catalyst may be washed one or more times with a liquid hydrocarbon after the preparation.

The essentially amorphous structure and the morphology of the support do not substantially change during the preparation of the catalyst. Thus, the catalyst obtained consists of particles whose physical properties are practically identical with those of the particles of the initial support. In particular, the catalyst consists of spheroidal particles which have a mass-average diameter of 10 to 100 microns, preferably of 20 to 50 microns, and a very narrow particle size distribution of less than 2.5, as measured by the ratio of the mass-average diameter to the number-average diameter.

Most of the vanadium compound and of the titanium compound are fixed on the support. Generally more than 80%, and often more than 90%, of the vanadium and titanium compounds are fixed.

In this catalyst the vanadium and titanium compounds are dispersed throughout the support, thus rendering the catalyst subsequently more robust during a copolymerization. It is observed that the amount of the organic electron-donor compound D1, initially present in the support, has diminished appreciably in the catalyst, because of substantial replacement by the vanadium and titanium compounds. The catalyst may and preferably does include a part of the reducing agent employed during the precipitation, but in a form converted by the reduction reaction.

In a preferred modification of the process of the invention, the solid catalyst can be prepared with the particular magnesium chloride support modified in a previous step by an electron-donor compound, D2, containing labile hydrogen. Prior to the contact of the support with the reducing agent and the vanadium and titanium compounds, the support can be contacted with at least one electron-donor compound, D2. The latter may be chosen from a large number of kinds of organic electron-donor compounds capable of losing a hydrogen atom and preferably soluble in liquid hydrocarbons; preferred are alcohols, phenols, primary and secondary phosphines, primary and secondary amines, primary amides, carboxylic acids, each of which may be aliphatic, cycloaliphatic, aromatic or aromatic alkyl and may contain from 1 to 20 carbon atoms. The compound D2 is preferably chosen from alcohols or phenols. In particular, an alcohol containing from 1 to 12 carbon atoms can be employed, especially ethanol, propanol, n-butanol, n-pentanol, 2-ethylhexanol or n-hexanol. A phenol such an alkyl phenol with 1 to 4 carbon atoms in the alkyl group, e.g. para-cresol, can also be employed. The compound D2 preferably exhibits a complexing power for magnesium chloride which is greater than that of the compound D1.

The contact of support and compound D2 may involve from 0.1 to less than 2 moles, preferably from 0.5 to 1.5 moles of the compound D2 per atom of magnesium of the support. The contact is preferably carried out with agitating, e.g. with stirring in a liquid hydrocarbon, in particular a saturated aliphatic hydrocarbon such as n-hexane or n-heptane, or a mixture. The contact between the support and the compound D2 may take place at a temperature ranging from 0 to 120°C, preferably from 0 to 80°C. It may last from 10 minutes to 10 hours, preferably from 30 minutes to 5 hours. In practice, the contact may be produced in various ways. For example, the compound D2 may be added slowly or fast to a suspension of the support agitated, e.g. stirred in a liquid hydrocarbon, with an addition time for example of from 10 minutes to 5 hours, preferably from 15 minutes to 2 hours. The suspension of the support in the liquid hydrocarbon may also be added to the compound D2 with agitation e.g. stirring. The compound D2 may be employed in the pure state or in solution in a liquid hydrocarbon.

Most of the compound D2 employed in contacting the support generally remains in the support without modifying appreciably the morphology and the particle size distribution of the support. Only the size of the support may increase appreciably. Once treated with the compound D2, the support may be washed one or more times with a hydrocarbon liquid. The solid product resulting of the step consisting of contacting the support with the compound D2 may have the general formula:

$$MgCl_2, x\ D_1, y\ D_2$$

wherein D1 and D2 denote the above-mentioned electron-donor compounds, x is a number ranging from 0.001 to 0.15, especially from 0.002 to 0.1 and y is a number ranging from 0.1 to 2, especially from 0.5 to 1.5. Bringing the support into contact with the compound D2, prior to contact with the vanadium and titanium compounds and the organometallic compound, is a preferred method of making the catalyst for use in the process of the present invention,because it will give an even greater possibility of fixing a relatively large quantity of the vanadium and titanium compounds on the support and of yielding a catalyst free from fine or microfine particles compared to use D1 alone. When the compound D2 is used to modify the support, it is preferred to use an alkyl organometallic compound, e.g. a trialkylaluminium compound, rather than an alkyl organometallic halide, such as a dialkylaluminium chloride, for reducing the vanadium and titanium compounds. The quantity of the reducing agent employed during the catalyst preparation is generally from 0.05 to 2 moles, preferably from 0.1 to 1 mole per mole of magnesium dichloride of the support. It is recommended that the reducing agent is employed in a quantity such that the molar ratio of the quantity of the reducing agent to that of the compound D2 in the support is from 0.5 to 1.5, especially from 0.8 to 1.2, preferably 1.0. If this ratio is too low, the quantity of vanadium and titanium compounds fixed on the support is reduced. On the contrary, if this ratio is too high, the catalyst becomes less active in polymerization.

The catalyst thus obtained may contain, per mole of magnesium dichloride, from 0.05 to 2 moles of vanadium, essentially in a reduced state, from $2.5 \times 10^{-4}$ to 2, preferably from $10^{-4}$ to 0.85 moles of titanium essentially in a reduced state, from 0.001 to 0.1 preferably from 0.005 to 0.05 mole of the organic electron-donor compound D1 and from 0.05 to 1 mole of the reducing agent in a form converted by the reduction reaction. When the compound D2 is used to modify the support, the catalyst finally obtained does not substantially contain the compound D2.

The (co-)polymerization reaction of ethylene optionally with alpha-olefin(s) is performed by employing the solid catalyst together with a cocatalyst chosen from the organometallic compounds of a metal belonging to groups I to III of the Periodic Classification of the elements, such as an organolithium, organomagnesium, organozinc and in particular an organoaluminium compound, especially ones in which the organic group is an alkyl group of 1 to 10 carbon atoms, such as triethylaluminium, tri-isobutylaluminium, tri-n-hexyl-aluminium, tri-n-octylaluminium or diethylaluminium chloride. The solid catalyst and the cocatalyst are generally employed in proportions such that the atomic ratio of the metal of the cocatalyst to the of vanadium and titanium of the catalyst is from 0.5 to 50, preferably from 0.8 to 10.

The solid catalyst and the cocatalyst are preferably employed in a gas phase process for copolymerizing a substantially gaseous mixture of ethylene with at least one alpha-olefin containing 3 to 8 especially 5 to 8 carbon atoms with a straight or branchedchain, such as propylene, 1-butene, 1-hexene or 4-methyl-1-pentene, and preferably an alpha-olefin containing 6 carbon atoms, e.g. 1-hexene or 4-methyl-1-pentene. The process of the present invention preferably gives an ethylene copolymer containing from about 1% to less than 30% especially from 2 to 25% by weight of the alpha-olefin(s), preferably of the alpha-olefin containing 6 carbon atoms. The ethylene copolymer may be a linear low density polyethylene (LLDPE) with an alpha-olefin content by weight from 5 to 10% or a very low density polyethylene (VLDPE) with an alpha-olefin content by weight heigher than 10% and lower than 30% especially equal to or lower than 25% by weight. The density of the ethylene copolymer may be from 0.96 to 0.88 g/cm$^3$, preferably from 0.935 to 0.915 g/cm$^3$ when the ethylene copolymer is a LLDPE, and preferably from 0.88 to lower than 0.915 g/cm$^3$, when the ethylene copolymer is a VLDPE. The ethylene copolymer may have a melt index, measured at 190°C under a load of 2.16 kg, from 1 to 50 g/10 minutes, preferably from 2 to 40, especially from 5 to 30 g/10 minutes, measured according to ASTM-D-1238 condition E.

The ethylene (co)polymer is directly prepared in the form of a dry powder consisting of spheroidal non-adhesive particles by contacting ethylene, or preferably a mixture of ethylene and the alpha-olefin(s) with the catalyst system, in the substantial absence of liquid, preferably in a gas fluidised and/or mechanically stirred bed reactor, at a temperature from 50 to 100°C, preferably from 60 to 90°C, under a total pressure ranging from 0.1 to 5 MPa. Preferably, the monomer such as ethylene, or the mixture of ethylene with the alpha-olefin(s) contains an inert gas, such as nitrogen, methane, propane, butane, pentane or isopentane, and optionally hydrogen.

The solid catalyst and the cocatalyst employed in the process of the present invention can be used directly or, preferably, after the solid catalyst has been subjected to an olefin prepolymerization operation carried out in one or more stages in a gaseous phase and/or in suspension in a liquid hydrocarbon medium. The prepolymerization operation results in an increase in the size of the catalyst particles while preserving the morphology of the latter. It consists in bringing the catalyst and some cocatalyst into contact with one or more olefins, such as ethylene, propylene, 1-butene, 1-hexene or 4-methyl-1-pentene, preferably with ethylene. The prepolymerization reaction may be conducted until 0.1 to 500 g and preferably 10 to 250 g of polyolefin is obtained per millimole of vanadium and titanium.

During the (co)polymerization reaction a uniform development of each (co)polymer particle may be observed and particularly an ethylene copolymer is obtained, under the form of a nonadhesive powder consisting of spheroidal particles, having a mean particle size from 500 to 1200 microns, good flow properties and a high bulk density, generally of between 0.3 to 0.5 g/cm$^3$. The copolymer has a relatively narrow molecular weight distribution, characterized by a ratio of the weight-average molecular weight Mw to the number-average molecular weight Mn of between 3 and 8. Furthermore, it may contain a very low proportion of transition metal, generally less than 15 parts per million by weight.

The ethylene (co)polymers may be transformed into shaped objects.

The following nonlimiting examples illustrate the process of the present invention, and the production of catalysts for use in it, whose properties are given in Table 1, in which V/Mg, Ti/Mg, V$^{3+}$ + T$_i^{3+}$/Mg, Al/Mg, OR/Mg and D1/Mg are the atomic or molar ratios of the elements contained in the catalysts and Dm and Dm/Dn are measured according to the method described in EP.A.0,099,772.

Example 1

Preparation of a support (A)

10.2 litres of a mixture containing 10 moles of dibutylmagnesium in n-hexane, 6.45 litres of n-hexane and, lastly, 1 litre of diisoamyl ether were introduced in succession during a first stage under nitrogen, at ambient temperature, into a 30-litre stainless steel reactor equipped with a stirring system rotating at a speed of 600 revolutions per minute and with a jacket. In a second stage, where the speed of the stirring system was maintained at 600 revolutions per minute and the temperature of the reactor at 25°C, 2.4 litres of tert-butyl chloride were added at a constant rate over 12 hours to the mixture thus obtained. At the end of this time the reaction mixture was kept at 25°C for 3 hours. The precipitate obtained was washed with 15 litres of n-hexane. Washing of the precipitate was repeated 6 times. The solid product formed a magnesium dichloride support (A), containing 0.12 moles of diisoamyl ether per mole of magnesium dichloride and less than 0.001 mole of Mg-C bond. Under microscopic examination the support (A) had the form of spheroidal particles with a mass-average diameter of 21 microns and an extremely narrow particle size distribution, such that the ratio Dm/Dn of the particles was equal to 1.4.

The specific surface of the support (A) was approximately 45 m$^2$/g (BET). The structure of the magnesium chloride in the support was essentially amorphous.

Preparation of a catalyst (B)

A suspension of the support (A) containing 0.1 mole of magnesium dichloride in 150 ml of n-hexane was introduced at ambient temperature and under a nitrogen atmosphere into a one-litre glass reactor equipped with a stirring system rotating at a speed of 250 revolutions per minute. 100 ml of a solution containing 0.2 moles/litre of diethylaluminium chloride in n-hexane were added over one hour to this suspension, which was kept stirred and at ambient temperature (25°C). The mixture was then kept stirred for 2 hours at 35°C. At the end of this time the suspension, kept stirred, was heated to a temperature of 50°C and 50 ml of a solution containing 0.4 moles/litre of vanadyl trichloride in n-hexane and 50 ml of a solution containing 0.02 moles/litre of titanium tetrachloride in n-hexane were added to it over 4 hours. A new suspension was thus obtained, which was kept stirred for a period of 2 hours at a temperature of 80°C. The stirring was then stopped and a solid catalyst (B) was allowed to settle. After removal of the supernatant liquid phase, the catalyst (B) was subjected to 2 successive washings, 200 ml of n-hexane at 50°C being used each time, and then to 3 successive washings, 500 ml of n-hexane at 25°C being used each time. The catalyst (B) was collected and stored under a nitrogen atmosphere.

Example 2

Preparation of a catalyst (C)

The operation was carried out exactly as in Example 1, apart from replacing the amounts of vanadium and titanium compounds by 45 ml of a solution containing 0.4 mole/1 of vanadyl trichloride and 50 ml of a solution containing 0.04 mole/1 of titanium tetrachloride in n-hexane.

Example 3

Preparation of a catalyst (D)

The operation was carried out exactly as in Example 1, apart from replacing titanium tetrachloride by titanium tetra-n-propoxide.

Example 4

Preparation of a catalyst (E)

The operation was carried out exactly as in Example 1, apart from replacing the amounts of vanadium and titanium compounds by 100 ml of a solution containing 0.02 mole/1 of vanadyl trichloride and 0.01 mole/1 of titanium tetrachloride in n-hexane.

Example 5

Preparation of a catalyst (F)

The operation was carried out exactly as in Example 1, apart from replacing titanium tetrachloride by titanium tetra-n-butoxide.

Example 6

Preparation of a catalyst (G)

The operation was carried out exactly as in Example 1, apart from replacing titanium tetrachloride by titanium tetraisopropoxide.

Example 7

Preparation of a catalyst (H)

The operation is carried out exactly as in Example 1, apart from replacing the amounts of vanadium and titanium compounds by 31.5 ml of a solution containing 0.4 mole/1 of vanadyl trichloride and 21 ml of a solution containing 0.4 mole/1 of titanium tetrachloride in n-hexane.

Example 8

Preparation of a catalyst (I)

A suspension of the support (A) prepared in Example 1, containing 0.1 mole of magnesium dichloride in 150 ml of n-hexane was introduced at ambient temperature and under a nitrogen atmosphere into a one-litre glass reactor equipped with a stirring system rotating at a speed of 250 revolutions per minute. 100 ml of a solution containing 0.2 moles/litre of diethylaluminium chloride in n-hexane were added over one hour to this suspension, which was kept stirred and at ambient temperature (25°C). The mixture thus obtained was then stirred for 2 hours at 35°C. At the end of this time it was heated to a temperature of 50°C and 100 ml of a solution containing 0.2 mole/1 of vanadyl trichloride was added to it over 4 hours. It was then kept at 80°C for two hours and at the end of this time the solid obtained was washed twice with 200 ml of n-hexane so as to obtain a second mixture, to which 12.5 ml of a solution containing 0.02 mole/1 of titanium tetrachloride were added at ambient temperature (25°C) over 1 hour. A new suspension was thus obtained, which was kept stirred for a period of one hour at a temperature of 40°C. The stirring was then stopped and the catalyst (H) obtained was allowed to settle. After removal of the supernatant liquid phase, the catalyst (I) was subjected to two successive washings, 200 ml of n-hexane being used each time.

Example 9

Preparation of a catalyst (J)

The operation was carried out exactly as in Example 8, apart from replacing the amount of titanium tetrachloride by 25 ml of a solution containing 0.02 mole/1 of titanium tetrachloride in n-hexane.

Example 10

Preparation of a magnesium chloride support (K)

204 ml (1 mole) of diisoamyl ether (DIAE) were introduced at ambient temperature (20°C) and under nitrogen atmosphere into a 5-litre stainless steel reactor equipped with a stirring system rotating at 325 revolutions/minute and containing 2 moles of dibutylmagnesium in solution in 3 litres of n-hexane. The reactor was maintained at 25°C. 484 ml (4.4 moles) of tert-butyl chloride were introduced into it over 12 hours. The mixture was then kept stirred for 3 hours at 25°C. The solid product (K) obtained was washed four times with 2 litres of n-hexane. 2 moles of magnesium chloride (K) were thus obtained, in the form of spheroidal particles with a mean diameter Dm = 35 microns and a particle size distribution Dm/Dn = 1.6 and having a DIAE/Mg molar ratio = 0.15 and a C1/Mg molar ratio = 2.

Preparation of a catalyst (L)

300 ml of n-hexane containing 0.1 mole of the magnesium chloride support (K) prepared above were introduced under nitrogen atmosphere and at 20°C into a one-litre glass reactor equipped with a stirring system rotating at 300 revolutions/minute. The reactor was heated to 30°C. 20 ml of n-hexane containing 0.1 mole of n-butanol were introduced into it over 1 hour. After the mixture had been kept stirred for 0.5 hours at 30°C, the solid obtained waswashed twice with 0.5 litre of n-hexane at 25°C. The volume of the suspension was brought back to 150 ml by decanting part of the supernatant liquid phase. 100 ml of n-hexane containing 0.1 mole of triethylaluminium were then introduced into the stirred suspension over 1 hour at 50°C. After the mixture had been kept stirred for 1 hour at 80°C, the solid obtained was washed twice with 0.5 litre of n-hexane at 50°C and twice with 0.5 litre of n-hexane at 25°C. The volume of the suspension was brought back to 150 ml by removing part of the supernatant liquid phase. 100 ml of n-hexane containing a mixture consisting of 16 millimoles of vanadyl trichloride and of 4 millimoles of titanium tetrachloride were then introduced into the stirred suspension at 30°C over 2 hours. After the mixture had been kept stirred for 1 hour at 80°C, the solid (L) obtained was washed twice at 50°C with 0.5 litres of n-hexane.

### Example 11

#### Preparation of a catalyst (M)

The operation was carried out exactly as in Example 10, apart from replacing n-butanol by ethanol.

### Example 12

#### Preparation of a catlyst (N)

The operation is carried out exactly as in Example 10, apart from replacing the amounts of vanadium and titanium compounds by 18 millimoles of vanadyl trichloride and 2 millimoles of titanium tetrachloride, the vanadyl trichloride and the titanium tetrachloride being introduced separately and simultaneously into the reactor.

### Example 13

#### Preparation of ethylene prepolymer

2 litres of n-hexane, 4 millimoles of diethylaluminium chloride, 8 millimoles of triethylaluminium and a quantity of each catalyst prepared in each of Examples 1 to 6 and 8 to 12 containing 4 millimoles of transition metal (vanadium and titanium) in total wereintroduced under a nitrogen atmosphere into a 5-litre stainless steel reactor equipped with a stirring system rotating at 750 revolutions per minute and kept at 60°C. 1 litre of hydrogen, measured under normal temperature and pressure conditions, was then introduced into the reactor, followed by ethylene at a uniform rate of 80 g/h for 4 hours. At the end of this time and after returning to ambient temperature the contents of the reactor were transferred to a rotary evaporator to remove all the solvent. Under these conditions, a dry prepolymer was recovered, which was in the form of a powder consisting of spheroidal particles and having good flow properties and which was stored under nitrogen.

#### Copolymerization of ethylene with 4-methyl-1-pentene in the gaseous phase

A powder charge of 200 g of a inert and anhydrous polyethylene powder, a quantity of the prepolymer prepared above containing 0.1 millimole of total transition metal (vanadium and titanium), 1 millimole of triisobutylaluminium and, lastly, a volume of hydrogen such as to obtain a partial pressure of 0.1 MPa at ambient temperature are introduced under a nitrogen atmosphere into a 2.6-litre stainless steel reactor equipped with a stirring device for dry powder, rotating at a speed of 250 revolutions per minute. The reactor is then heated to 80 °C and ethylene at 150 g/h and 4-methyl-1-pentene at 15 g/h are continuously introduced into it over 4 hours. At the end of the copolymerization, a copolymer of ethylene with 4-methyl-1-pentene is recovered in the form of a powder consisting of spheroidal non-adhesive particles.

### Example 14

#### Preparation of ethylene prepolymer

The operation is carried out exactly as in Example 13, apart from using the catalyst prepared according to Example 7.

#### Copolymerization of ethylene with 4-methyl-1-pentene in the gaseous phase.

The operation is carried out exactly as in Example 13, apart from using the prepolymer prepared above.

Table 1: Characteristics of the catalysts

| Example | V/Mg | Ti/Mg | $V^{3+}+Ti^{3+}/Mg$ | Al/Mg | OR/Mg | Dl/Mg | Dm (micron) | Dm/Dn |
|---------|-------|--------|---------|-------|-------|-------|-------------|-------|
| 1 | 0.135 | 0.0097 | 0.088 | 0.121 | 0 | 0.04 | 20 | 1.9 |
| 2 | 0.126 | 0.02 | 0.038 | 0.098 | 0 | 0.03 | 21 | 2.0 |
| 3 | 0.138 | 0.0077 | 0.0675 | 0.115 | 0.03 | 0.035 | 21 | 1.9 |
| 4 | 0.149 | 0.01 | 0.0875 | 0.11 | 0 | 0.04 | 21 | 1.9 |
| 5 | 0.127 | 0.0068 | 0.0697 | 0.119 | 0.03 | 0.032 | 20 | 1.9 |
| 6 | 0.147 | 0.0071 | 0.084 | 0.125 | 0.033 | 0.04 | 20 | 1.9 |
| 7 | 0.09 | 0.08 | 0.15 | 0.11 | 0 | 0.04 | 20 | 1.9 |
| 8 | 0.170 | 0.01 | 0.081 | 0.09 | 0 | 0.037 | 21 | 1.9 |
| 9 | 0.170 | 0.02 | 0.133 | 0.12 | 0 | 0.035 | 20 | 1.9 |
| 10 | 0.150 | 0.04 | – | 0.15 | – | 0.01 | 31 | 1.7 |
| 11 | 0.160 | 0.04 | – | 0.17 | – | 0.01 | 33 | 1.6 |
| 12 | 0.180 | 0.018 | – | 0.17 | – | 0.01 | 31 | 1.6 |

## Claims

1. Process for preparing in a gaseous phase a copolymer of ethylene with at least one alpha-olefin containing 3 to 8 carbon atoms in the presence of a Ziegler-Natta catalyst system comprising (1) a solid catalyst comprising a transition metal and a spheroidal magnesium chloride support and (2) a cocatalyst based on at least one organometallic compound of a metal belonging to groups I to III of the Periodic Classification of the elements, a process characterised in that a mixture of ethylene with the said alpha-olefin(s) is contacted with the cocatalyst and a solid catalyst to produce directly in the form of a dry powder a copolymer of ethylene containing from about 1% to less than 30% by weight of the said alpha-olefin(s), the solid catalyst having been obtained by contacting within a liquid hydrocarbon,

(a) a vanadium compound and a titanium compound, both soluble in the said liquid hydrocarbon, with a V/Ti atomic ratio from 50/50 to 99.5/0.5, with

(b) at least one organometallic compound capable of reducing the said vanadium and titanium compounds, and with

(c) a solid support containing (i) from 80 to 99.5 mol% of magnesium dichloride substantially free from any product containing an Mg-C bond, and (ii) from 0.5 to 20 mol% of at least one organic electron-donor compound, D1, free from labile hydrogen, the said solid support consisting of spheroidal particles which have a mass-average diameter, Dm, of 10 to 100 microns and a narrow particle size distribution such that the ratio of Dm to the number-average diameter, Dn, of the particles is less than 2.5

2. Process for preparing in a gaseous phase a copolymer of ethylene with at least one alpha-olefin containing 3 to 8 carbon atoms with a Ziegler-Natta catalyst system comprising (1) a solid catalyst comprising a transition metal and (2) a cocatalyst based on at least one organometallic compound of a metal belonging to groups I to III of the Periodic Classification of the elements, a process characterised in that a mixture of ethylene with the said alpha-olefin(s) is contacted with the cocatalyst and a solid catalyst to produce directly in the form of a dry powder a copolymer of ethylene containing from about 1% to less than 30% by weight of the said alpha-olefin(s), the solid catalyst having been obtained:
- in a first step, by contacting at least one electron-donor compound, D2, containing labile hydrogen with a solid support containing (i) from 80 to 99.5 mol% of magnesium dichloride substantially free from any product containing an Mg-C bond, and (ii) from 0.5 to 20 mol% of at least one organic electron-donor compound, D1, free from labile hydrogen, the said solid support consisting of spheroidal particles which have a mass-average diameter, Dm, of 10 to 100 microns and a narrow particle size distribution such that the ratio of Dm to the number-average diameter, Dn, of the particles is less than 2.5, and
- in a second step, by contacting within a liquid hydrocarbon the solid product resulting of the first step with
  (a) a vanadium compound and a titanium compound, both soluble in the said liquid hydrocarbon and with a V/Ti atomic ratio from 50/50 to 99.5/0.5 and with
  (b) at least one organometallic compound capable of reducing the said vanadium and titanium compounds.

3. Process according to Claim 1 or 2, characterised in that the solid catalyst is used in the form of an olefin prepolymer containing from 0.1 to 500 g of polyolefin per millimole of vanadium and titanium.

4. Process according to Claim 1 or 2, characterised in that the alpha-olefin contains 6 carbon atoms.

5. Process according to Claim 1 or 2, characterised in that the gas phase copolymerization is carried out at a temperature from 50 to 100°C under a total pressure from 0.1 to 5 MPa in a gas fluidised and/or mechanically stirred bed reactor.

6. Process for preparing a Ziegler-Natta type catalyst comprising a spheroidal support of magnesium chloride, process characterized in that a vanadium compound and a titanium compound are precipitated on the support by means of a reaction of reduction of vanadium and of titanium, which is carried out by contacting within a liquid hydrocarbon:
  (a) a vanadium compound and a titanium compound, both soluble in said liquid hydrocarbon with V/Ti atomic ratio from 50/50 to less than 70/30, with
  (b) at least one organometallic compound capable of reducing the said vanadium and titanium compounds, and with
  (c) a support containing (i) from 80 to 99.5 mol% of magnesium dichloride which is substantially free from any product containing an Mg-C bond, and (ii) from 0.5 to 20 mol% of at least one organic electron-donor compound D1 free from labile hydrogen, the said support consisting of spheroidal particles having a mass-average diameter Dm of 10 to 100 microns and a particle size distribution such that the ratio of Dm to the number-average diameter Dn of the particles is less than 2.5, preferably less than 2.

7. Use of the catalyst prepared according to Claim 6 for producing homopolyethylene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | EP-A-0 204 340  (THE DOW CHEM. CO.)<br>* Claims; examples *<br>--- | 1 | C 08 F 210/16<br>C 08 F  2/34<br>C 08 F  4/685 |
| Y | EP-A-0 336 545  (BP CHEM.)<br>* Claims; examples 11,12 *<br>--- | 1 | |
| Y | EP-A-0 155 770  (BP CHEM.)<br>* Claims *<br>----- | 1 | |

TECHNICAL FIELDS
SEARCHED (Int. Cl.5)

C 08 F

The present search report has been drawn up for all claims

| Place of search | Date of completion of the search | Examiner |
|---|---|---|
| THE HAGUE | 30-07-1991 | DE ROECK R.G. |

EPO FORM 1503 03.82 (P0401)